# EUROPEAN PATENT SPECIFICATION

(11) **EP 2 457 183 B1**
(45) Date of publication and mention of the grant of the patent: **27.12.2017**
(21) Application number: 10707957.6
(22) Date of filing: 15.01.2010
(51) Int. Cl.: G06F 17/30

(54) **SYSTEM AND METHOD FOR TAGGING MULTIPLE DIGITAL IMAGES**
SYSTEM UND VERFAHREN ZUR KENNZEICHNUNG MEHRERER DIGITALER BILDER
SYSTÈME ET PROCÉDÉ DE MARQUAGE DE MULTIPLES IMAGES NUMÉRIQUES

(30) Priority: 20.07.2009 US 505642
(43) Date of publication of application: 30.05.2012
(73) Proprietor: Sony Mobile Communications Inc., Shinagawa-ku, Tokyo 140-0002 (JP)
(72) Inventor: ENSTRÖM, Jimmy, S-21137 Malmö (SE); LARSSON, Bo, S-217 64 Malmö (SE)
(74) Representative: Ström & Gulliksson AB
(86) International application number: PCT/IB2010/000074
(87) International publication number: WO 2011/010192

(56) References cited:
- US-A1- 2007 098 303
- US-A1- 2009 171 783
- HANBURY ET AL: "A survey of methods for image annotation" JOURNAL OF VISUAL LANGUAGES & COMPUTING, ACADEMIC PRESS LNKD- DOI:10.1016/J.JVLC.2008.01.002, vol. 19, no. 5, 1 October 2008 (2008-10-01), pages 617-627, XP025408252 ISSN: 1045-926X [retrieved on 2008-01-29]
- BARNARDK ETAL: "Matching Words and Pictures" JOURNAL OF MACHINE LEARNING RESEARCH, MIT PRESS, CAMBRIDGE, MA, US LNKD- DOI:10.1162/153244303322533214, vol. 3, 1 February 2003 (2003-02-01), pages 1107-1135, XP007902960 ISSN: 1532-4435
- BARNARD K ET AL: "Learning the semantics of words and pictures" PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 2, 7 July 2001 (2001-07-07), pages 408-415, XP010554117 ISBN: 978-0-7695-1143-6
- PETER CARBONETTO ET AL: "A Statistical Model for General Contextual Object Recognition" 22 April 2004 (2004-04-22), COMPUTER VISION - ECCV 2004; [LECTURE NOTES IN COMPUTER SCIENCE;;LNCS], SPRINGER-VERLAG, BERLIN/HEIDELBERG, PAGE(S) 350 - 362 , XP019005787 ISBN: 9783540219842 abstract page 360 figure 6

## Description

### TECHNICAL FIELD OF THE INVENTION

The present invention relates to electronic devices that render digital images, and more particularly to a system and methods for tagging multiple digital images in a convenient and efficient manner to provide an improved organizational mechanism for a database of digital images.

### DESCRIPTION OF THE RELATED ART

Contemporary digital cameras typically include embedded digital photo album or digital photo management applications in addition to traditional image capture circuitry. Furthermore, as digital imaging circuitry has become less expensive, other portable devices, including mobile telephones, portable data assistants (PDAs), and other mobile electronic devices often include embedded image capture circuitry (e.g. digital cameras) and digital photo album or digital photo management applications in addition to traditional mobile telephony applications.

Popular digital photo management applications include several functions for organizing digital photographs. Tagging is one such function in which a user selects a digital photograph or portion thereof and associates a text item therewith. The text item is commonly referred to as a "text tag" and may provide an identification label for the digital image or a particular subject depicted within a digital image. Tags may be stored in a data file containing the digital image, including, for example, by incorporating the tag into the metadata of the image file. Additionally or alternatively, tags may be stored in a separate database which is linked to a database of corresponding digital images. A given digital photograph or image may contain multiple tags, and/or a tag may be associated with multiple digital images. Each tag may be associated with a distinct subject in a digital photograph, a subject may have multiple tags, and/or a given tag may be associated with multiple subjects whether within a single digital photograph or across multiple photographs.

For example, suppose a digital photograph is taken which includes a subject person who is the user's father. A user may apply to the photograph one or more tags associated with the digital image such as "father", "family", and "vacation" (e.g., if the user's father was photographed while on vacation). The digital photograph may include other subject persons each associated with their own tags. For example, if the photograph also includes the user's brother, the photograph also may be tagged "brother". Other photographs containing an image of the user's father may share tags with the first photograph, but lack other tags. For example, a photograph of the user's father taken at home may be tagged as "father" and "family", but not "vacation". As another example, a vacation photograph including only the user's mother also may be tagged "family" and "vacation", but not "father".

It will be appreciated, therefore, that a network of tags may be applied to a database of digital images to generate a comprehensive organizational structure of the database. In particular, the tagging of digital images has become a useful tool for organizing photographs of friends, family, objects, events, and other subject matter for posting on social networking sites accessible via the Internet or other communications networks, sharing with other electronic devices, printing and manipulating, and so on. Once the digital images in the database are fully associated with tags, they may be searched by conventional methods to access like photographs. In the example described above, a user who wishes to post vacation photographs on a social networking site may simply search a digital image database by the tag "vacation" to identify and access all the user's photographs of his vacation at once, which may then be posted on the social networking site. Similarly, should the user desire to access and/or post photographs of his mother, the user may search the database by the tag "mother", and so on.

Despite the increased popularity and usage of tagging to organize digital photographs for manipulation, current systems for adding tags have proven deficient. One method of tagging is manual entry by the user. Manual tagging is time consuming and cumbersome if the database of digital images and contained subject matter is relatively large. In an attempt to reduce the effort associated with manual tagging, some tagging applications may maintain lists of most recent tags, commonly used tags, and the like from which a user may more readily select a tag. Even with such improvements, manual tagging still has proven cumbersome as to large numbers of digital images.

To overcome burdens associated with manual tagging, automatic tagging techniques have been developed which apply recognition algorithms to identify subject matter depicted in a database of digital images. In recognition algorithms, subject matter depicted in a digital image may be compared to a reference database of images in an attempt to identify the subject matter. Such recognition algorithms particularly have been applied to subject persons in the form of face recognition. Face recognition tagging, however, also has proven deficient. Face recognition accuracy remains limited, particularly as to a large reference database. There is a high potential that even modest "look-alikes" that share common overall features may be misidentified, and therefore mis-tagged. Mis-tagging, of course, would undermine the usefulness of any automatic tagging system. The accuracy of current automatic tagging systems diminishes further when such algorithms are applied to objects generally, for object recognition has proven difficult to perform accurately.

In addition, conventional manual and recognition tagging systems typically tag only one digital image at a time. As stated above, however, to provide a comprehensive organizational structure of a digital image database, it is often desirable for multiple digital images to share one or more common tags. Tagging each digital image individually is cumbersome and time consuming, even when using a recognition or other automatic tagging system.

Hanbury et al: "A survey of methods for image annotation", Journal of Visual Languages & Computing, Academic Press LNKD-DOI: 10.1016/J.JVLC.2008.01.002, vol. 19, no. 5, 1 October 2008 (2008-10-01), pages 617-627, XP025408252, ISSN: 1045-926X describes an on-line annotation application aimed at collecting keywords describing image regions for object recognition evaluation.

Barnard K et al: "Matching Words and Pictures", Journal of Machine Learning Research, MIT Press, Cambridge, MA, US LNKD- DOI: 10.1162/153244303322533214, vol. 3, 1 February 2003 (2003-02-01), pages 1107-1135, XP007902960, ISSN: 1532-4435 describes an approach for modeling multi-modal data sets, focusing on the specific case of segmented images with associated text.

Barnard K et al: "Learning the semantics of words and pictures", Proceedings of the Eighth IEEE International Conference on Computer Vision. (ICCV). Vancouver, British Columbia, Canada, July 7-14, 2001 ; [International Conference on Computer Vision], Los Alamitos, CA : IEEE Comp. Soc, US, vol. 2, 7 July 2001 (2001 -07-07), pages 408-415, XP010554117, ISBN: 978-0-7695-1143-6 describes a statistical model for organizing image collections which integrates semantic information provided by associated text and visual information provided by image features.

Peter Carbonetto et al: "A Statistical Model for General Contextual Object Recognition", 22 April 2004 (2004-04-22), Computer Vision - ECCV 2004; [Lecture Notes in Computer Science;;LNCS], Springer-Verlag, Berlin/Heidelberg, Page(s) 350 - 362, XP019005787,ISBN : 9783540219842 describes object recognition as the process of attaching meaningful labels to specific regions of an image, and a model that learns spatial relationships between objects

US 2007/098303 A1 describes a method of identifying a particular person in a digital image collection.

US 2009/171783 A1 describes a method for organizing digital photos includes receiving a set of digital photos, analyzing the set of digital photos to create tags that identify content information in the set of digital photos, tagging the set of digital photos in accordance with their corresponding content information, categorizing the set of digital photos in accordance with their corresponding tags, and displaying the digital photos and their corresponding tags with a display device.

### SUMMARY

Accordingly, there is a need in the art for an improved system and methods for the manipulation and organization of digital images (and portions thereof) that are rendered on an electronic device. In particular, there is a need in the art for an improved system and methods for text tagging multiple digital images at once with one or more common tags.

Therefore, a system for tagging multiple digital images includes an electronic device having a display for rendering a plurality of digital images. An interface in the electronic device receives an input of an area of interest within one of the rendered images, and receives a selection of images from among the rendered images to be associated with the area of interest. In one embodiment, the interface may be a touch screen interface or surface on the display, and the inputs of the area of interest and associated images selection may be provided by interacting with the touch screen surface with a stylus, finger, or other suitable input instrument. An input device in the electronic device receives a tag input based on the area of interest, which is then applied to the associated images. In one embodiment, the input device is a keypad that receives a manual input of tag text.

Alternatively, an automatic tagging operation may be performed. In automatic tagging, portions of the rendered images may be transmitted to a network tag generation server. The server may compare the image portions to a reference database of images to identify subject matter that is common to the image portions. The server may generate a plurality of suggested tags based on the common subject matter and transmit the suggested tags to the electronic device. The user may accept one of the suggested tags, and the accepted tag may be applied to each of the associated images.

Therefore, according to one aspect of the invention, an electronic device comprises a display for rendering a plurality of digital images. An interface receives an input of an area of interest within at least one of the plurality of rendered images, and receives a selection of images from among the plurality of rendered images to be associated with the area of interest. An input device receives an input of a tag based on the area of interest to be applied to the associated images, and a controller is configured to receive the tag input and to apply the tag to each of the associated images.

According to one embodiment of the electronic device, the input device is configured for receiving a manual input of the tag.

According to one embodiment of the electronic device, the controller is configured to extract an image portion from each of the associated images, the image portions containing common subject matter based on the area of interest. The electronic device comprises a communications circuit for transmitting the image portions to a tag generation server and for receiving a plurality of tag suggestions from the tag generation server based on the common subject matter. The input device receives an input of one of the suggested tags, and the controller is further configured to apply the accepted tag to each of the associated images.

According to one embodiment of the electronic device, each image portion comprises a thumbnail portion extracted from each respective associated image.

According to one embodiment of the electronic device, each image portion comprises an object print of the common subject matter.

According to one embodiment of the electronic device, the interface comprises a touch screen surface on the display, and the area of interest is inputted by drawing the area of interest on a portion of the touch screen surface within at least one of the rendered images.

According to one embodiment of the electronic device, the associated images are selected from among the plurality of rendered images by interacting with a portion of the touch screen surface within each of the images to be associated.

According to one embodiment of the electronic device, the electronic device further comprises a stylus for providing the inputs to the touch screen surface.

According to one embodiment of the electronic device, the interface comprises a touch screen surface on the display and the display has a display portion for displaying the inputted area of interest, and the associated images are selected by interacting with the touch screen surface to apply the displayed area of interest to each of the images to be associated.

According to one embodiment of the electronic device, a plurality of areas of interest are inputted for a respective plurality of rendered images, and the controller is configured to apply the tag to each image that is associated with at least one of the areas of interest.

According to one embodiment of the electronic device, at least a first tag and a second tag are applied to at least one of the associated images, wherein the first tag corresponds to a general image category and the second tag corresponds to a specific image category within the general image category.

According to another aspect of the invention, a communications system comprises the above electronic device and a tag generation server that comprises a network interface for receiving a plurality of image portions from an electronic device, the image portions each being extracted from a plurality of respective associated images. A database comprises a plurality of reference images. A controller is configured to compare the received image portions to the reference images to identify subject matter common to the image portions, and configured to generate a plurality of tag suggestions based on the common subject matter to be applied to each of the associated images, wherein the tag suggestions are transmitted via the network interface to the electronic device.

According to one embodiment of the tag generation server, if the controller is unable to identify the common subject matter, the controller is configured to generate an inability to tag indication, wherein the inability to tag indication is transmitted via the network interface to the electronic device.

According to one embodiment of the tag generation server, the network interface receives from the electronic device a first group of image portions each being extracted from a first group of associated images, and a second group of image portions each being extracted from a second group of associated images. The controller is configured to compare the first group of image portions to the reference images to identify first subject matter common to the first group of image portions, and configured to generate a first plurality of tag suggestions based on the first common subject matter to be applied to each of the first associated images. The controller also is configured to compare the second group of image portions to the reference images to identify second subject matter common to the second group of image portions, and configured to generate a second plurality of tag suggestions based on the second common subject matter to be applied to each of the second associated images. The first and second plurality of tag suggestions are transmitted via the network interface to the electronic device.

According to one embodiment of the tag generation server, each reference image comprises an object print of a respective digital image.

According to another aspect of the invention, a method of tagging a plurality of digital images comprises the steps of rendering a plurality of digital images on a display, receiving an input of an area of interest within at least one of the plurality of digital images, receiving a selection of images from among the plurality of rendered images and associating the selected images with the area of interest, receiving an input of a tag to be applied to the associated images, and applying the inputted tag to each of the associated images.

According to one embodiment of the method, receiving the tag input comprises receiving a manual input of the tag.

According to one embodiment of the method, the method further comprises extracting an image portion from each of the associated images, the respective image portions containing common subject matter based on the area of interest, transmitting the image portions to a tag generation server, receiving a plurality of tag suggestions from the tag generation server based on the common subject matter, and applying at least one of the suggested tags to each of the associated images.

According to one embodiment of the method, the method further comprises receiving an input of a plurality of areas of interest for a respective plurality of rendered images, and applying the tag to each image that is associated with at least one of the areas of interest.

According to one embodiment of the method, the method further comprises applying at least a first tag and a second tag to at least one of the associated images, wherein the first tag corresponds to a general image category and the second tag corresponds to a specific image category within the general image category.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

The invention is defined according to the electronic device of claim 1 and the method of claim 13.

### BRIEF DESCRIPTION OF THE DRAWINGS

FIG. 1 is a schematic front view of a mobile telephone as an exemplary electronic device that includes a tagging application.
FIG. 2 is a schematic block diagram of operative portions of the mobile telephone of FIG. 1.
FIG. 3 is a flowchart chart depicting an overview of an exemplary method of tagging multiple digital images with a common tag.
FIG. 4 depicts an exemplary rendering of multiple images to be tagged on the display of an electronic device.
FIGs. 5 and 6 each depict an exemplary process of associating multiple images for tagging.
FIG. 7 depicts an exemplary organizational tag tree that represents an example of a manner by which tags may relate to each other.
FIG. 8 is a schematic diagram of a communications system in which the mobile telephone of FIG. 1 may operate.
FIG. 9 depicts a functional block diagram of operative portions of an exemplary tag generation server.
FIG. 10 is a flowchart chart depicting an overview of an exemplary method of automatically tagging multiple digital images with a common tag from the viewpoint of a user electronic device.
FIG. 11 depicts an exemplary automatic tagging operation.
FIG. 12 is a flowchart chart depicting an overview of an exemplary method of automatically tagging multiple digital images with a common tag from the viewpoint of a networked tag generation server.
FIG. 13 depicts an exemplary automatic tagging operation based on object recognition.
FIG. 14 depicts an exemplary tagging operation based on user defined criteria.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

In the illustrated embodiments, a digital image may be rendered and manipulated as part of the operation of a mobile telephone. It will be appreciated that aspects of the invention are not intended to be limited to the context of a mobile telephone and may relate to any type of appropriate electronic device, examples of which include a stand-alone digital camera, a media player, a gaming device, a laptop or desktop computer, or similar. For purposes of the description herein, the interchangeable terms "electronic equipment" and "electronic device" also may include portable radio communication equipment. The term "portable radio communication equipment," which sometimes is referred to as a "mobile radio terminal," includes all equipment such as mobile telephones, pagers, communicators, electronic organizers, personal digital assistants (PDAs), smartphones, and any communication apparatus or the like. All such devices may be operated in accordance with the principles described herein.

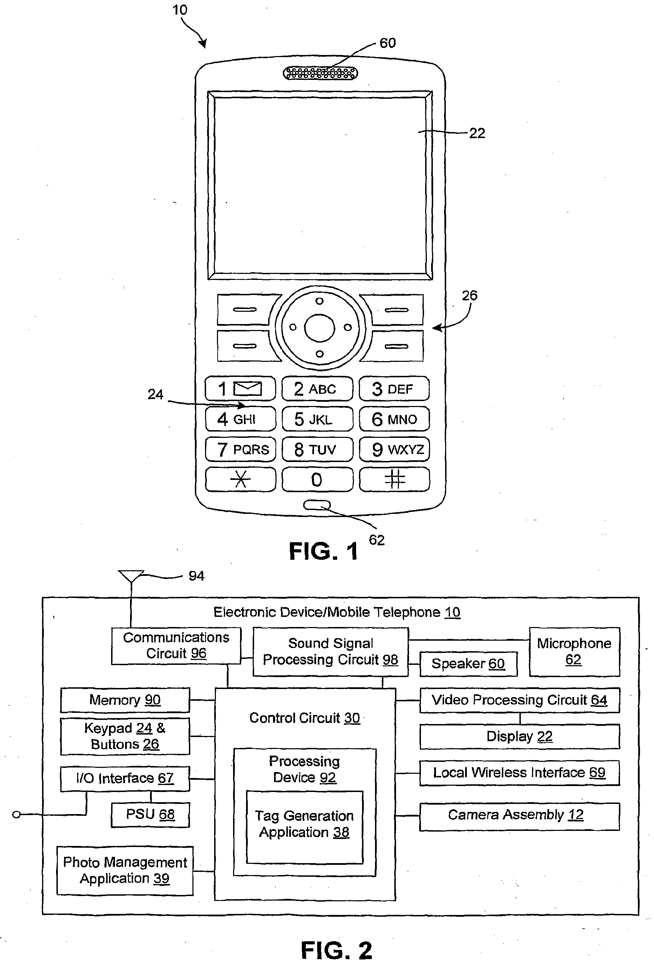

FIG. 1 is a schematic front view of an electronic device 10 in the form of a mobile telephone, and FIG. 2 is a schematic block diagram of operative portions of the electronic device/mobile telephone 10. The exemplary mobile telephone is depicted as having a "block" or "brick" configuration, although the mobile telephone may have other configurations, such as, for example, a clamshell, pivot, swivel, and/or sliding cover configuration as are known in the art.

The electronic device 10 includes a display 22 for displaying information to a user regarding the various features and operating state of the mobile telephone 10. Display 22 also displays visual content received by the mobile telephone 10 and/or retrieved from a memory 90. As part of the present invention, display 22 may render and display digital images for tagging. In one embodiment, the display 22 may function as an electronic viewfinder for a camera assembly 12.

An input device is provided in the form of a keypad 24 including buttons 26, which provides for a variety of user input operations. For example, keypad 24/buttons 26 typically include alphanumeric keys for allowing entry of alphanumeric information such as telephone numbers, phone lists, contact information, notes, etc. In addition, keypad 24/buttons 26 typically includes special function keys such as a "send" key for initiating or answering a call, and others. The special function keys may also include various keys for navigation and selection operations to access menu information within the mobile telephone 10. As shown in FIG. 1, for example, the special function keys may include a five-way navigational ring containing four directional surfaces and a center button that may be used as an "enter key" selection button. Some or all of the keys may be used in conjunction with the display as soft keys. In addition, keypad 24 and/or buttons 26 may be associated with aspects of the camera system 12. For example, one of the keys from the keypad 24 or one of the buttons 26 may be a shutter key that the user may depress to command the taking of a photograph. One or more keys also may be associated with entering a camera mode of operation, such as by selection from a conventional menu or by pushing a dedicated button for the camera function. Keys or key-like functionality also may be embodied as a touch screen associated with the display 22.

In one embodiment, digital images to be tagged in accordance with the principles described herein are taken with the camera assembly 12. It will be appreciated, however, that the digital images to be tagged as described herein need not come from the camera assembly 12. For example, digital images may be stored in and retrieved from the memory 90. In addition, digital images may be accessed from an external or network source via any conventional wired or wireless network interface. Accordingly, the precise of source of the digital images to be tagged may vary.

Referring again to FIG. 2, the electronic device 10 may include a primary control circuit 30 that is configured to carry out overall control of the functions and operations of the device 10. The control circuit 30 may include a processing device 92, such as a CPU, microcontroller or microprocessor.

Among their functions, to implement the features of the present invention, the control circuit 30 and/or processing device 92 may comprise a controller that may execute program code stored on a machine-readable medium embodied as tag generation application 38. Application 38 may be a stand-alone software application or form a part of a software application that carries out additional tasks related to the electronic device 10. It will be apparent to a person having ordinary skill in the art of computer programming, and specifically in application programming for mobile telephones, servers or other electronic devices, how to program an electronic device to operate and carry out logical functions associated with the application 38. Accordingly, details as to specific programming code have been left out for the sake of brevity. In addition, application 38 and its various components may be embodied as hardware modules, firmware, or combinations thereof, or in combination with software code. Also, while the code may be executed by control circuit 30 in accordance with exemplary embodiments, such controller functionality could also be carried out via dedicated hardware, firmware, software, or combinations thereof, without departing from the scope of the invention.

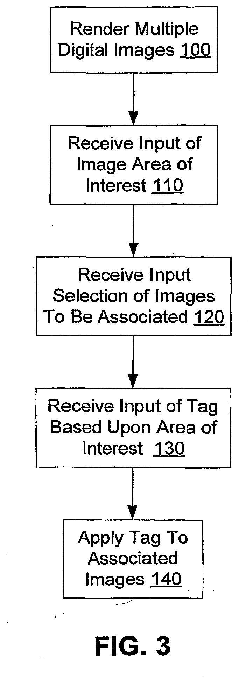

Application 38 may be employed to apply common text tags to multiple digital images in a more efficient manner as compared to conventional tagging systems. FIG. 3 is a flowchart chart depicting an overview of an exemplary method of tagging multiple digital images with a common text tag. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention. As indicated, the method depicted in FIG. 3 represents an overview, and additional details are provided in connection with various examples set forth below.

The method may begin at step 100 at which a plurality of digital images are rendered. For example, multiple digital images may be rendered on display 22 of electronic device 10 by taking multiple images with the camera assembly 12, retrieving the images from a memory 90, accessing the images from an external or network source, or by any conventional means. At step 110, the electronic device may receive an input defining a particular area of interest within one of the rendered images. The inputted area of interest may define representative subject matter about which the desired tag may be based. At step 120, the electronic device may receive a user input selection of multiple images to be associated with each other as a group of images. At step 130, the electronic device may receive an input of a tag which may be based upon the area of interest as defined above. At step 140, the tag may be applied to each of the associated images.

It will be appreciated that step 130 in particular (the input of the tag) may occur at any point within the tag generation process. For example, a tag input alternatively may be received by the electronic device at the outset of the method, after the images are rendered, after the area of interest is defined, or at any suitable time. In one embodiment, the multiple images may be stored or otherwise linked as an associated group of images, and tagged at some later time. In such an embodiment, the associated group of images may be shared or otherwise transmitted among various devices and/or image databases, with each corresponding user applying his or her own tag to the associated group of images.

As stated above, FIG. 3 represents an overview of an exemplary method for tagging multiple digital images. Additional details will now be described with respect to the following examples. The examples are provided for illustrative purposes to explain variations and specific embodiments, and it will be understood that the examples are not intended to limit the scope of the invention. In particular, the precise form and content of the graphical user interface associated with the tag generation application described herein may be varied.

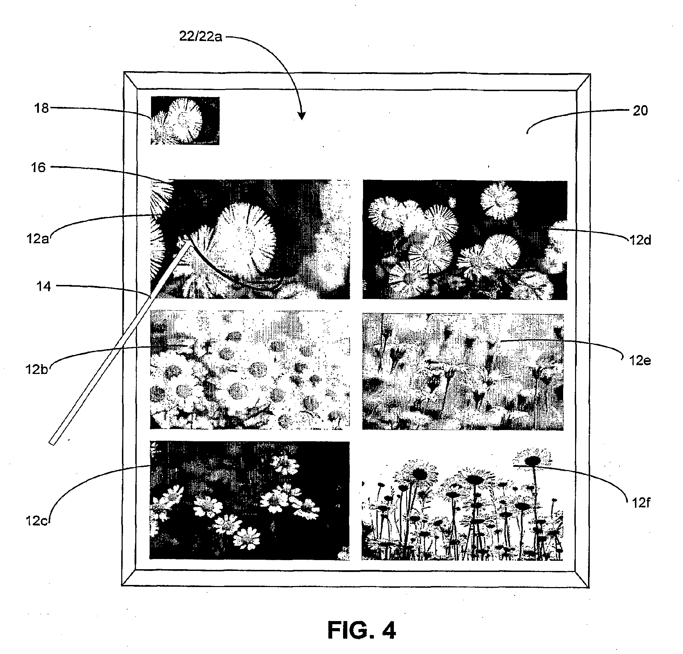

FIG. 4 depicts an exemplary rendering of a plurality of digital images 12a-12f on the display 22 of an electronic device. The electronic device may first receive an input of an area of interest 16 as shown by the indicator line in the figure. In the depicted embodiment, the electronic device may have an interface in the form of a touch screen surface 22a incorporated into the display 22. A user may draw the area of interest 16 on the touch screen interface with an input instrument 14, such as a stylus, finger, or other suitable input instrument as are known in the art. For convenience, the input instrument 14 will be referred to subsequently as the stylus 14. It will be appreciated that other forms of inputs may be employed as well. For example, inputs may be generated using voice commands, eye tracking, camera-detected gestures, and others. Accordingly, although many examples herein use a stylus interacting with a touch screen, the input mechanism may vary substantially. Once the area of interest is defined, the area of interest may be represented or approximated as a thumbnail 18 displayed in an upper portion 20 of the display 22. Once the area of interest is defined, the multiple images 12a-f may be associated for tagging in the following manner.

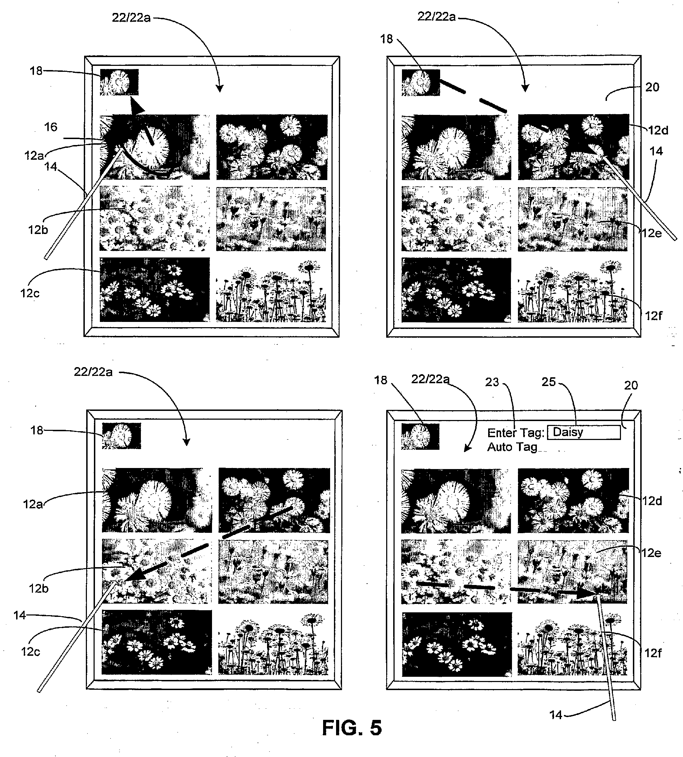

FIG. 5 depicts an exemplary process of associating the multiple images 12a-f for tagging. The four sub-figures of FIG.5 may be considered as representing sequential manipulations or interactions with the touch screen interface 22a of the display 22, and/or the images rendered therein. The upper left image is comparable to FIG. 3, and represents the defining of the area of interest 16 by drawing on the touch screen interface 22a with stylus 14. The area of interest is again depicted in the thumbnail 18 in the upper portion 20 of the display 22. The dashed arrows depicted in FIG.5 are intended to illustrate the sequential manipulations or interaction with the display 22 via the touch screen surface or interface 22a. It will be appreciated that the arrows provide an explanatory context, but ordinarily would not actually appear on the display 22. As seen in FIG. 5, a user may apply the displayed area of interest to each of the images to be associated. For example, a user may employ the stylus 14 to select the thumbnail 18. A user may then click or drag the thumbnail on the touch screen surface, thereby selecting one or more images 12a-f. In FIG. 5, the sequential selection of images 12d, 12b, and 12e is shown by following the dashed arrows. Although not specifically shown for simplicity, it will be appreciated that images 12c and 12f may be selected in similar fashion. Once the selection of images is complete, the tag generation application 38 (see FIG. 2) may automatically associate the selected images with each other and with image 12a from which the thumbnail 18 was generated.

An input of a tag may then be received based upon the thumbnail 18 of the area of interest 16. As seen in the lower-right sub-figure of FIG. 5, in one embodiment a user may be prompted by a prompt 23 with a request for a tag generation input. The user may select an input generation method using the keypad, touch screen, or by any conventional means. A user may select to input a tag manually in text box 25 by typing or inputting the desired tag text with an input device such as a keypad of the electronic device. In this example, the user has entered the tag text "Daisy" based on the defined area of interest. A user also may be prompted with an "Auto Tag" option to attempt to automatically generate or suggest a tag. The automatic tag features are described in more detail below. In FIG. 5, the tag input is shown as occurring after the image association. As stated above, such need not be the case. In one embodiment, the images are stored or linked as an associated group of images, which may be accessed at some subsequent time for tagging.

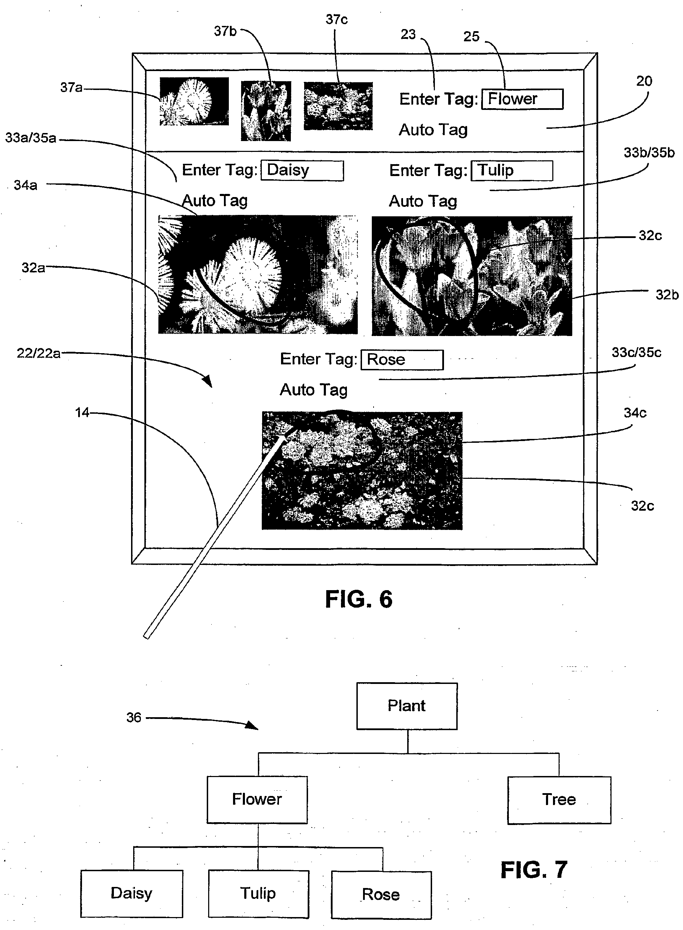

FIG. 6 depicts another exemplary process of associating multiple digital images for tagging. In this example, three digital images 32a-c are rendered in the display 22 of an electronic device. The stylus 14 has been employed to define on the touch screen surface 22a three respective areas of interest 34a-c for the digital images 32a-c, as shown by the indicator lines in the figure. The tag generation application has commensurately generated three respective thumbnail images 37a-c for the areas of interest 34a-c, which are displayed in the upper portion 20 of display 22.

In this example, a user would have a variety of tagging options. For example, similar to the process of FIGs. 4 and 5, a user may be prompted by a prompt 23 within the display portion 20 to tag all three images under a common tag. A user may employ an input device such as a keypad to enter tag text in the text box 25, such as "Flower," to group the images under a common user-defined tag, or may select an automatic tagging option (described in more detail below) to tag the three images with a common tag. Alternatively or additionally, a user may be prompted to tag each image individually via separate prompt/box pairs 33a/35a, 33b/35b, and 33c/35c associated with each respective image. In this manner each image may be associated with multiple tags, which may or may not be tags in common with other images.

In accordance with the above, FIG. 7 depicts an organizational tag tree 36 that represents a manner by which the tags may relate to each other. For example, images may be organized by applying a general tag in one of the ways described above, such as "Plant," to an associated group of images. Sub-groups of images may be further organized by applying more specific tags within the general category. In the example of FIG. 7, plant images may be sub-grouped by applying the more specific tag "Flower" to images of flowers generally. Flower images may be sub-grouped further by applying a more specific tag for each given type of flower (e.g., "Daisy," "Tulip," "Rose"). As FIGs. 3-6 demonstrate, as to groups of multiple images, the images may be assigned one or more common tags. It will be appreciated that the potential variation of organizational components of groups and sub-groups and associated tags is myriad and not limited by the example of FIG. 7.

In this vein, tags may be applied to multiple images in a highly efficient manner. The system may operate in a "top-down" fashion. By selecting the tag Flower, images subsequently grouped under the more specific tags Daisy, Tulip, or Rose automatically would also be tagged Flower. The system also may operate in a "bottom-up" fashion. By defining an area of interest for the related but not identical subjects of Daisy, Tulip, and Rose, the system automatically may generate the tag Flower for the group in accordance with the tag tree. Similarly, in one embodiment only one Daisy tagged image would need to be tagged Flower. By tagging one Daisy tagged image with the tag Flower, the tag Flower also may be applied automatically to every other Daisy tagged image. As a result, common tagging of multiple images is streamlined substantially in a variety of ways.

The various tags may be incorporated or otherwise associated with an image data file for each of the digital images. For example, the tags may be incorporated into the metadata for the image file, as is known in the art. Additionally or alternatively, the tags may be stored in a separate database having links to the associated image files. Tags may then be accessed and searched to provide an organizational structure to a database of stored images. For example, as shown in FIG. 2 the electronic device 10 may include a photo management application 39, which may be a standalone function, incorporated into the camera assembly 12, incorporated into the tag generation application 38, or otherwise present in the electronic device 10. If a user desires to access a group of associated digital images (such as for printing, posting on a social networking site, sharing with a friend, or other manipulation), a user many execute the application 39 by any conventional means. Application 39 may include a search function that permits a user to enter a search query for a tag, "Flower" for example, upon which all digital images tagged with the "Flower" tag are grouped for further manipulation. In the specific examples above, a query using the Flower tag would provide as results the six daisy images of FIGs. 4 and 5 together with the tulip and rose images of FIG. 6.

In each of the above examples, the specific tag input was received by the electronic device by a manual entry inputted by the user with an input device such as a keypad. The tag was then applied automatically to an associated group of images. In other embodiments, the tag input itself may be received (step 130 of FIG. 3) automatically. More specifically, a plurality of image portions relating to a defined area of interest may be compared to a reference database of digital images (or portions of digital images) to automatically generate a plurality of suggested tags. A user may choose to accept one of the suggested tags, or enter a tag manually as described above. In one embodiment, the reference database may be contained within the electronic device 10, and the comparison may be performed by an internal controller, such as the control circuit 30 and/or processor 92 depicted in FIG. 2. However, because it is desirable that the reference database be large, for enhanced storage capacity and processing capability the reference database may be stored on a network server having its own controller to perform the requisite processing.

Referring briefly back to FIG. 2, the electronic device 10 may include an antenna 94 coupled to a communications circuit 96. The communications circuit 96 may include a radio frequency transmitter and receiver for transmitting and receiving signals via the antenna 94 as is conventional. In accordance with the present invention, the communications circuit is a tag input device in the form of a network interface that may be employed to transmit and receive images or image portions, tag suggestions, and/or related data over a communications network as described below.

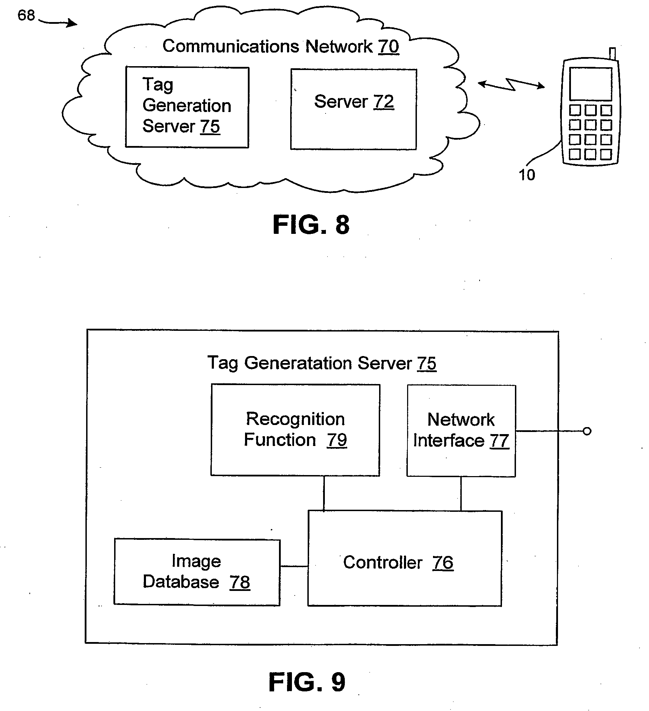

Referring to FIG. 8, the electronic device (mobile telephone) 10 may be configured to operate as part of a communications system 68. The system 68 may include a communications network 70 having a server 72 (or servers) for managing calls placed by and destined to the mobile telephone 10, transmitting data to the mobile telephone 10 and carrying out any other support functions. The server 72 communicates with the mobile telephone 10 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 70 may support the communications activity of multiple mobile telephones 10 and other types of end user devices. As will be appreciated, the server 72 may be configured as a typical computer system used to carry out server functions and may include a processor configured to execute software containing logical instructions that embody the functions of the server 72 and a memory to store such software.

Communications network 70 also may include a tag generation server 75 to perform operations associated with the present invention. Although depicted as a separate server, the tag generation server 75 or components thereof may be incorporated into one or more of the communications servers 72.

FIG. 9 depicts a functional block diagram of operative portions of an exemplary tag generation server 75. The tag generation server may include a controller 76 for carrying out and coordinating the various functions of the server. The tag generation server also may include an image database 78 for storing a plurality of reference digital images. Tag generation server 75 also may include a network interface 77 for communicating with electronic devices across the network. Tag generation server 75 also may include a picture recognition function 79, which may be executed by the controller to attempt to identify subject matter within an image for tagging. The picture recognition function 79 may be embodied as executable code that is resident in and executed by the tag generation server 75. The function 79, for example, may be executed by the controller 76. The picture recognition function 79 may be a stand-alone software application or form a part of a software application that carries out additional tasks related to the server 75. It will be apparent to a person having ordinary skill in the art of computer programming, and specifically in application programming for servers or other electronic devices, how to program the server 75 to operate and carry out logical functions associated with the picture recognition function 79. Accordingly, details as to specific programming code have been left out for the sake of brevity. Also, while the function 79 may be executed by respective processing devices in accordance with an embodiment, such functionality could also be carried out via dedicated hardware or firmware, or some combination of hardware, firmware and/or software.

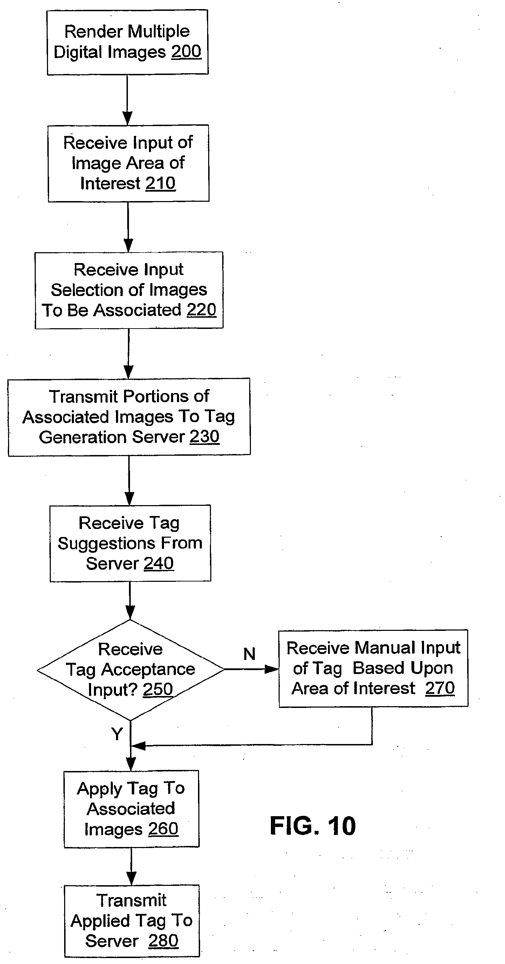

FIG. 10 is a flowchart chart depicting an overview of an exemplary method of automatically tagging multiple digital images with a common tag from the viewpoint of a user electronic device. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention. As indicated, the method depicted in FIG. 10 represents an overview, and additional details are provided in connection with various examples set forth below.

The method may begin at step 200 at which multiple digital images are rendered. At step 210, the electronic device may receive an input defining a particular area of interest within one of the rendered images. The inputted area of interest may define a representative image portion upon which the desired tag may be based. At step 220, the electronic device may receive a user input selection of multiple images to be associated with each other as a group of images. Note that steps 200, 210, and 220 are comparable to the steps 100, 110, and 120 of FIG. 3, and may be performed in the same or similar manner.

As step 230, a portion of each associated image may be transmitted from the electronic device to an external or networked tag generation server, such as the tag generation server 75. In one embodiment, the image portions may comprise entire images. Referring briefly back to FIGs. 4 and 5, for example, the electronic device may transmit each of the images 12a-f. However, because of the processing capacity required to transmit and process full images, it is preferred that only a portion of each associated image be transmitted.

In another embodiment, therefore, a partial image portion may be defined and extracted from each associated image. For example, a thumbnail image portion may be extracted from each associated image based on the point in the image in which a user touches the image with the stylus 14 on the touch screen surface 22a. As seen in FIG. 5, for example, the user has touched each associated image at one of the daisies depicted therein. The thumbnail, therefore, would be extracted as centered on each respective daisy with perhaps a small outlining area. In another embodiment, application 38 further may generate an "object print" of the extracted image portion extracted from each associated image 12a-f.

As used herein, the term "object print" denotes a representation of an object depicted in the digital image that would occupy less storage capacity than the broader digital image itself. For example, the object print may be a mathematical description or model of an image or an object within the image based on image features sufficient to identify the object. The features may include, for example, object edges, colors, textures, rendered text, image miniatures (thumbnails), and/or others. Mathematical descriptions or modeling of objects is known in the art and may be used in a variety of image manipulation applications. Object prints sometimes are referred to in the art as "feature vectors". By transmitting object prints to the tag generation server rather than the entire images, processing capacity may be used more efficiently.

As will be explained in more detail below, the tag generation server may analyze the transmitted image portions to determine a plurality of suggested common tags for the images. The tag generation server may generate a plurality of tag suggestions to enhance the probability that the subject will be identified, as compared to if only one tag suggestion were to be generated. Any number of tag suggestions may be generated. In one embodiment, the number of tag suggestions may be 5-10 tag suggestions. In addition, the tag suggestions may be ranked or sorted by probability or proportion of match of the subject matter to enhance the usefulness of the tag suggestions.

At step 240 of FIG. 10, therefore, the electronic device may receive the plurality of tag suggestions from the tag suggestion server. At step 250, the electronic device may receive a user input as to whether one of the tag suggestions is accepted. If one of the tag suggestions is accepted, the electronic device may apply the accepted tag automatically to each of the associated images. If at step 250 none of the tag suggestions are accepted, at step 270 the electronic device may return to a manual tagging mode by which a manual input of a tag is received in one of the ways described above. At step 260, the accepted or inputted tag may then be applied to each of the associated images. Regardless of whether a tag suggestion is accepted or whether a tag is inputted manually, at step 280 the electronic device may transmit the applied tag to the tag generation server, which updates the reference database as to the applied tag. The applied tag may then be accessed in subsequent automatic tagging operations to improve the efficiency and accuracy of such subsequent automatic tagging operations.

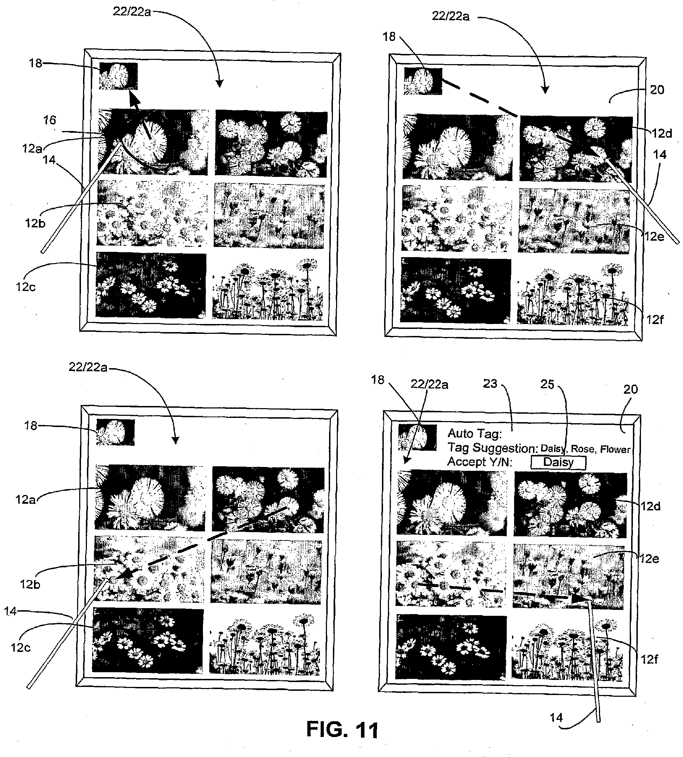

For example, FIG. 11 depicts a variation of FIG. 5 in which the Auto Tag operation has been selected. Similar to FIG. 5, FIG. 11 depicts how a user may define an area of interest 16, which may then be associated with each of the images 12a-f. As explained above, a thumbnail image portion and/or object print may be extracted from each associated image based on the daisy in each image that a user touches with the stylus 14 on the touch screen surface 22a. The image portions containing daisy images may be transmitted to the tag generation server, which may attempt to identify the common subject matter of the image portions. For example, in the lower right image, the prompt 23 is now an Auto Tag prompt containing a plurality of suggested tag texts of "Daisy, Rose, or Flower." The text box 25 now contains a prompt to receive an input of an acceptance or rejection of one of the suggested tag texts ("Y/N"). In the example depicted in the figure, the user has accepted the "Daisy" tag suggestion, and the accepted tag "Daisy" is applied to each of the associated images 12a-f. If the tag suggestion is not accepted (input "N"), the configuration of the display 22 may return to a form comparable to that of FIG. 5, in which the user may be prompted to manually input tag text into the text box 25. As stated above, regardless of whether a tag suggestion is accepted or whether a tag is inputted manually, the electronic device may transmit the applied tag to the tag generation server. The applied tag may then be accessed in subsequent automatic tagging operations.

A similar process may be applied to the digital images depicted in FIG. 6. In such an example, image portions may be generated respectively containing a daisy, tulip, and rose. Note that the common subject matter is now "Flower", insofar as each image portion depicts a specific type of flower. The image portions may be transmitted to the tag generation server, which may identify the common subject matter and transmit a plurality of tag suggestions as described above. In this example, the suggested tag "Flower" may be accepted by the user from among the suggested tags and incorporated into each of the associated images.

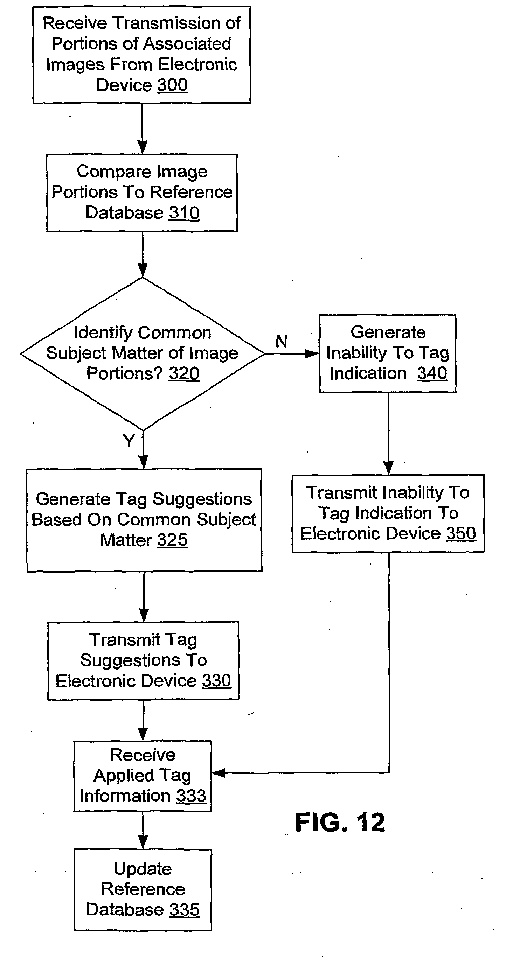

FIG. 12 is a flowchart chart depicting an overview of an exemplary method of automatically tagging multiple digital images with a common text tag from the viewpoint of a networked tag generation server, such as tag generation server 75. FIG. 12, therefore, may be considered a method that corresponds to that of FIG. 10, but from the point of view of the tag generation server. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention. As indicated, the method depicted in FIG. 12 represents an overview, and additional details are provided in connection with various examples set forth below.

The method may begin at step 300 at which the server receives from an electronic device a plurality of image portions, each extracted from a respective associated digital image rendered on the electronic device. As stated above, the image portions may be thumbnail portions extracted from the digital images, object prints of subject matter depicted in the images, or less preferably the entire images themselves. At step 310, the tag generation server may compare the received image portions to a database of reference images. Similar to the received image portions, the reference images may be entire digital images, but to preserve processing capacity, the reference images similarly may be thumbnail portions or object prints of subject matter extracted from broader digital images. At step 320, a determination may be made as to whether common subject matter in the received image portions can be identified based on the comparison with the reference image database. If so, at step 325 a plurality of tag suggestions may be generated based on the common subject matter, and at step 330 the plurality of tag suggestions may be transmitted to the electronic device. As stated above in connection with the mirror operations of the electronic device, a user may accept to apply one of the suggested tags or input a tag manually. Regardless, at step 333 the tag generation server may receive a transmission of information identifying the applied tag. At step 335, the tag generation server may update the reference database, so the applied tag may be used in subsequent automatic tagging operations.

If at step 320 common subject matter cannot be identified, at step 340 the tag generation server may generate an "Inability To Tag" indication, which may be transmitted to the electronic device at step 350. The user electronic device may then return to a manual tagging mode by which a manual input of a tag may be inputted in one of the ways described above. In such case, the tag generation server still may receive a transmission of information identifying the applied tag and update the reference database commensurately (steps 333 and 335).

Automatic tagging with the tag generation server also may be employed to provide a plurality of tag suggestions, each pertaining to different subject matter. For example, the server may receive from the electronic device a first group of image portions extracted from a respective first group of associated images, and a second group of image portions extracted from a respective second group of associated images. The first and second groups of image portions each may be compared to the reference database to identify common subject matter for each group. A first plurality of tag suggestions may be generated for the first group of image portions, and a second plurality of tag suggestions may be generated for the second group of image portions. Furthermore, in the above examples, the subject matter of the images tended to be ordinary objects. Provided the reference database is sufficiently populated, tag suggestions may be generated even if a user does not know the precise subject matter depicted in the images being processed.

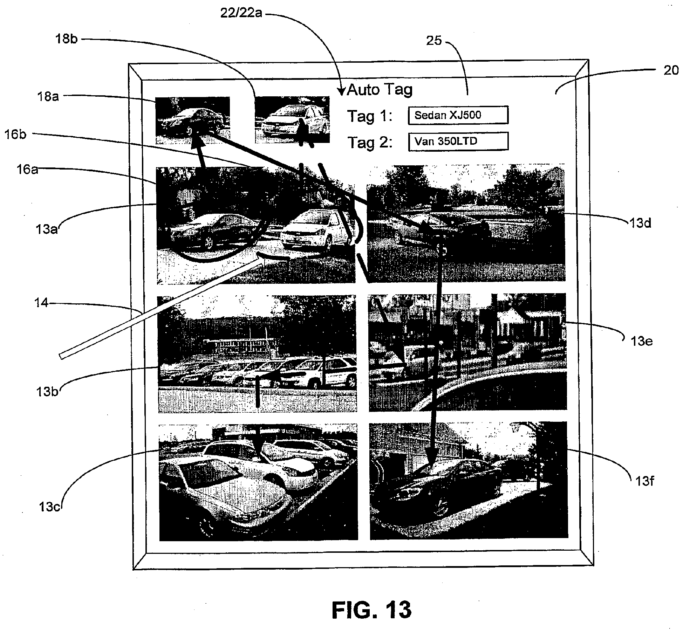

For example, FIG. 13 depicts an example for automatically tagging images depicting multiple subjects, when the user may not be able to identify the precise subject matter of the images. In the example of FIG. 13, the electronic device has rendered a plurality of images of two cars at various locations, but the user may not know the precise model of each car. As further described below, the automatic tagging system described herein may indentify the specific car models and generate corresponding tags for the user.

Similar to previous figures, FIG. 13 depicts a display 22 in which six images, numbered 13a-f, are rendered. The images may be manipulated using a stylus 14 applied to a touch screen interface or surface 22a on display 22. Automatic tagging information may be provided in an upper display portion 20 of display 22. In this example, the user has employed the stylus 14 to define two areas of interest 16a and 16b on the touch screen surface 22a. The areas of interest may each depict a car about which the user is interested, but the user may not know the precise model of each car. For example, area of interest 16a may depict a particular sedan, and area of interest 16b may depict a particular van. Again similar to previous examples, the defined area of interest 16a is reproduced as an image portion 18a in the form of a thumbnail representation of the area of interest 16a (the sedan). In addition, the defined area of interest 16b is reproduced as an image portion 18b in the form of a thumbnail representation of the area of interest 16b (the van). The images 13b-f each depict one of the cars represented by one of the thumbnails 18a (sedan) or 18b (van).

The image manipulations based on areas of interest 16a and 16b are distinguished in FIG.13 by solid lines and arrows versus dashed lines and arrows respectively. The arrows depicted in FIG.13 are intended to illustrate the sequential manipulations or interaction with the touch screen interface 22a of the display 22. It will be appreciated that the arrows provide an explanatory context, but ordinarily would not actually appear on the display 22. As seen in FIG. 13, a user may employ the stylus 14 to select the first thumbnail 18a of the sedan. A user may then apply the displayed area of interest by clicking or dragging the thumbnail, thereby selecting one or more images 13b-f to be associated with the sedan. In FIG. 13, for example, the sequential selection of images 13d and 13f to be associated with the sedan is shown by following the solid arrows.

Similarly, a user may employ the stylus 14 to select the second thumbnail 18b of the van. A user may then click or drag the thumbnail, thereby selecting one or more images 13b-f to be associated with the van. In FIG. 13, for example, the sequential selection of images 13e, 13b, and 13c to be associated with the van is shown by following the dashed arrows. In this manner, a user has defined two associated groups of images, a first group of associated images for the sedan (13a, 13d, and 13f) and a second group of associated images for the van (13a, 13e, 13b, and 13c).

Methods comparable to those of FIGs. 10 and 12 may be applied to each associated group of images. The first group of image portions for the sedan may be transmitted to the tag generation server and compared to the reference images. Upon identifying the subject sedan, a first tag suggestion or plurality of tag suggestions may be generated for the sedan. Similarly, the second group of image portions for the van may be transmitted to the tag generation server and compared to the reference images. Upon identifying the subject van, a second tag suggestion or plurality of tag suggestions may be generated for the van. As seen in FIG. 13, the system has identified a model number for each of the sedan and van and has suggested a respective tag text corresponding to each model number. The automatic tag suggestion may be displayed in dialog boxes 25 in the display portion 20. If accepted, the "Sedan XJ500" tag would be applied automatically to each image associated with the sedan, and the "Van 350LTD" tag would be applied automatically to each image associated with the van.

Tags, therefore, may be generated automatically for images depicting varying subjects, even when the user is unaware of the precise subject matter depicted in the digital images. The described system has advantages over conventional automatic tagging systems. The system described herein generates a plurality of image portions each containing specific subject matter for comparing to the reference images, as compared to a broad, non-specific single image typically processed in conventional systems. By comparing multiple and specific image portions to the reference images, the system described herein has increased accuracy as compared to conventional systems. Furthermore, in the above example tagging was performed automatically as to two groups of images. It will be appreciated that such tagging operation may be applied to any number of multiple groups of images (e.g., five, ten, twenty, other).

In the previous examples, the tags essentially corresponded to the identity of the pertinent subject matter. Such need not be the case. For example, a user may not apply any tag at all. In such case, the electronic device may generate a tag. A device-generated tag may be a random number, thumbnail image, icon, or some other identifier. A user then may apply a device-generated tag to multiple images in one of the ways described above.

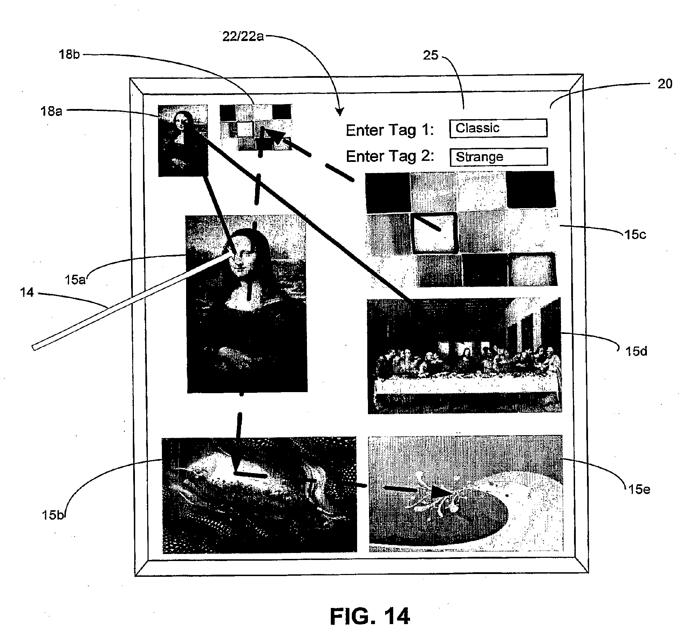

A user also may define tags based on personal descriptions, feelings, attitude, characterization, or by any other user defined criteria. FIG. 14 depicts an example in which a plurality of images may be tagged based on user defined criteria. In the example of FIG. 14, an electronic device has rendered images of artistic works, but the user is not particularly knowledgeable about art. Instead of organizing the images based on information about each work such as title, artist, genre, etc., the user would rather organize the images based on a user defined characteristic or description. As further described below, the tagging system described herein provides a way for a user to organize images based on such user defined criteria.

Similar to previous figures, FIG. 14 depicts a display 22 in which a plurality of images, numbered 15a-e, are rendered. The images may be manipulated using a stylus 14 applied to the touch screen interface or surface 22a on display 22. Again similar to previous examples, the user has selected one of the images 15a to provide content for an image portion 18a in the form of the thumbnail representation of the image 15a. In addition, the user has selected another one of the images 15c to provide content for an image portion 18c in the form of the thumbnail representation of the image 15c. The user wishes to associate each of the other images 15b, 15e, and 15c with one or the other images represented respectively by thumbnails 18a or 18b.

The image manipulations based on thumbnails 18a and 18b are distinguished in FIG.14 by solid lines and arrows versus dashed lines and arrows respectively. The arrows depicted in FIG.14 are intended to illustrate the sequential manipulations or interaction with the display 22. It will be appreciated that the arrows provide an explanatory context, but ordinarily would not actually appear on the display 22. As seen in FIG. 14, a user may employ the stylus 14 to select the first thumbnail 18a. A user may then click or drag the thumbnail on the touch screen surface, thereby selecting one or more images 15b-f to be associated with the thumbnail 18a. In FIG. 14, for example, the selection of image 15d to be associated with the thumbnail 18a is shown by following the solid arrows.

Similarly, a user may employ the stylus 14 to select the second thumbnail 18b. A user may then click or drag the thumbnail on the touch screen surface, thereby selecting one or more images 15b-f to be associated with the thumbnail 18b. In FIG. 14, for example, the sequential selection of images 15b and 15e to be associated with the thumbnail 18b is shown by following the dashed arrows. In this manner, a user has defined two associated groups of images, one for the thumbnail 18a (images 15a and 15d) and one for the thumbnail 18b (images 15b, 15c, and 15e). Dialog boxes 25 may then be employed to enter a tag text to be applied automatically to the images in each respective associated group. In this example, the user wishes to tag one group of images of the artworks as "Classic" and the other as "Strange". Tags, therefore, may be generated automatically for differing groups each containing plurality of images, based upon user characterizations or other defined criteria.

As stated above, the various examples described herein are intended for illustrative purposed only. The precise form and content of graphical user interface, databases, and digital images may be varied without departing from the scope of the invention.

It will be appreciated that the tagging systems and methods described herein have advantages over conventional tagging systems. The described system has enhanced accuracy and is more informative because tags may be based upon specific user-defined areas of interest within the digital images. Accordingly, there would be no issue as to what portion of an image should provide the basis for a tag.

Manual tagging is improved because a tag entered manually may be applied to sub-areas of numerous associated images. A user, therefore, need not tag each photograph individually. In this vein, by associating digital images with categorical tags of varying generality, a hierarchal organizational of digital photographs may be readily produced. The hierarchal categorical tags may also be employed to simultaneously generate tags for a plurality of images within a given category. A user may also tag images based on characterization of content or other user defined criteria, obviating the need for the user to know the specific identity of depicted subject matter.

Automatic tagging also is improved as compared to conventional recognition tagging systems. The system described herein provides multiple image portions containing specific subject matter for comparing to the reference images, compared to the broad, non-specific single images typically processed in conventional systems. By comparing multiple image portions containing specific subject matter to the reference images, the system described herein has increased accuracy as compared to conventional recognition tagging systems. Accurate tags, therefore, may be generated automatically for images depicting varying subjects, even when user is unaware of the precise subject matter being depicted.

Although the invention has been described with reference to digital photographs, the embodiments may be implemented with respect to other categories of digital images. For example, similar principles may be applied to a moving digital image or frames or portions thereof, a webpage downloaded from the Internet or other network, or any other digital image.

Referring again to FIG. 2, additional components of the mobile telephone 10 will now be described. For the sake of brevity, generally conventional features of the mobile telephone 10 will not be described in great detail herein.

The mobile telephone 10 includes call circuitry that enables the mobile telephone 10 to establish a call and/or exchange signals with a called/calling device, typically another mobile telephone or landline telephone, or another electronic device. The mobile telephone 10 also may be configured to transmit, receive, and/or process data such as text messages (e.g., colloquially referred to by some as "an SMS," which stands for short message service), electronic mail messages, multimedia messages (e.g., colloquially referred to by some as "an MMS," which stands for multimedia messaging service), image files, video files, audio files, ring tones, streaming audio, streaming video, data feeds (including podcasts) and so forth. Processing such data may include storing the data in the memory 90, executing applications to allow user interaction with data, displaying video and/or image content associated with the data, outputting audio sounds associated with the data and so forth.

The mobile telephone 10 further includes a sound signal processing circuit 98 for processing audio signals transmitted by and received from the radio circuit 96. Coupled to the sound processing circuit are a speaker 60 and microphone 62 that enable a user to listen and speak via the mobile telephone 10 as is conventional (see also FIG. 1).

The display 22 may be coupled to the control circuit 30 by a video processing circuit 64 that converts video data to a video signal used to drive the display. The video processing circuit 64 may include any appropriate buffers, decoders, video data processors and so forth. The video data may be generated by the control circuit 30, retrieved from a video file that is stored in the memory 90, derived from an incoming video data stream received by the radio circuit 96 or obtained by any other suitable method.

The mobile telephone 10 also may include a local wireless interface 69, such as an infrared transceiver, RF adapter, Bluetooth adapter, or similar component for establishing a wireless communication with an accessory, another mobile radio terminal, computer or another device. In embodiments of the present invention, the local wireless interface 69 may be employed as a communications circuit for short-range wireless transmission of images or image portions, tag suggestions, and/or related data among devices in relatively close proximity.

The mobile telephone 10 also may include an I/O interface 67 that permits connection to a variety of conventional I/O devices. One such device is a power charger that can be used to charge an internal power supply unit (PSU) 68. In embodiments of the present invention, I/O interface 67 may be employed as a communication circuit for wired transmission of images or image portions, tag suggestions, an/or related data between devices sharing a wired connection.

## Claims

1. An electronic device (10) comprising:
a display (22) configured to render a plurality of digital images;
**characterized by**
an interface (22a) configured to receive an input of an area of interest within at least one of the plurality of rendered images, in response to a user touching the image on the display by means of an input instrument (14), wherein the area of interest is reproduced as an image portion in the form of a thumbnail representation on the display, and to receive a selection of images from among the plurality of rendered images, in response to the user touching the thumbnail and the selected images on the display by means of the input instrument (14), to be associated with the area of interest;
an input device (24) configured to receive an input of a tag based on the area of interest to be applied to the associated images; and
a controller (30, 92) configured to receive the tag input and to apply the tag to each of the associated images by incorporating the tag with an image data file for each of the digital images.

2. The electronic device (10) according to claim 1, wherein the input device (24) is configured for receiving a manual input of the tag.

3. The electronic device (10) according to any of claims 1 or 2, wherein the controller (30, 92) is configured to extract an image portion from each of the associated images in response to a user touching a point or item in the images by means of the input instrument (14), wherein the image portions contain common subject matter based on the area of interest; and
the electronic device comprises a communications circuit (96) for transmitting the image portions to a tag generation server (75) and for receiving a plurality of tag suggestions from the tag generation server based on the common subject matter; wherein
the input device (24) receives a tag input of an acceptance of one of the suggested tags, and the controller is further configured to apply the accepted tag to each of the associated images.

4. The electronic device (10) according to any of claims 1-3, wherein the interface (22a) comprises a touch screen surface on the display (22), and the area of interest is inputted by drawing the area of interest on a portion of the touch screen surface within at least one of the rendered images.

5. The electronic device (10) according to claim 4, wherein the associated images are selected from among the plurality of rendered images by interacting with a portion of the touch screen surface (22a) within each of the images to be associated.

6. The electronic device (10) according to claim 1, wherein the interface (22a) comprises a touch screen surface on the display (22) and the display has a display portion (20) for displaying the inputted area of interest, and the associated images are selected by interacting with the touch screen surface to apply the displayed area of interest to each of the images to be associated.

7. The electronic device (10) according to any of claims 1-6, wherein a plurality of areas of interest are inputted for a respective plurality of rendered images, and the controller (30, 92) is configured to apply the tag to each image that is associated with at least one of the areas of interest.

8. The electronic device (10) according to claim 7, wherein at least a first tag and a second tag are applied to at least one of the associated images, wherein the first tag corresponds to a general image category and the second tag corresponds to a specific image category within the general image category.

9. The electronic device (10) according to claim 7 or 8, wherein the controller (30, 92) is configured to execute program code stored on a machine-readable medium embodied as a tag generation application (38).

10. The electronic device (10) according to claim 9, wherein the tag generation application (38) is embodied as hardware modules, firmware, or combinations thereof.

11. A communications system (68) comprising:
an electronic device (10) according to any of claims 1-10; amd
a tag generation server (75) comprising:
a network interface (77) for receiving a plurality of image portions from an electronic device (10), the image portions each being extracted from a plurality of respective associated images;
a database (78) comprising a plurality of reference images; and
a server controller (76) configured to execute a picture recognition function (79) to identify subject matter within the plurality of image portions and to compare the received image portions to the reference images to identify subject matter common to the image portions, and configured to generate a plurality of tag suggestions based on the common subject matter to be applied to each of the associated images;
wherein the tag suggestions are transmitted via the network interface to the electronic device.

12. The communications system (68) according to claim 11, wherein the network interface (77) receives from the electronic device (10) a first group of image portions each being extracted from a first group of associated images, and a second group of image portions each being extracted from a second group of associated images;
the server controller (76) is configured to compare the first group of image portions to the reference images to identify first subject matter common to the first group of image portions, and configured to generate a first plurality of tag suggestions based on the first common subject matter to be applied to each of the first associated images; and
the server controller is configured to compare the second group of image portions to the reference images to identify second subject matter common to the second group of image portions, and configured to generate a second plurality of tag suggestions based on the second common subject matter to be applied to each of the second associated images;
wherein the first and second pluralities of tag suggestions are transmitted via the network interface to the electronic device.

13. A method of tagging a plurality of digital images comprising the steps of:
rendering a plurality of digital images on a display (22); **characterized by**
receiving an input of an area of interest within at least one of the plurality of digital images, in response to a user touching the image on the display by means of an input instrument (14), wherein the area of interest is reproduced as an image portion in the form of a thumbnail representation on the display;
receiving a selection of images from among the plurality of rendered images and associating the selected images with the area of interest in response to the user touching the thumbnail and the selected images on the display by means of the input instrument (14);
receiving an input of a tag to be applied to the associated images; and
applying the inputted tag to each of the associated images by incorporating the tag with an image data file for each of the digital images.

14. The method according to claim 13, wherein receiving the tag input comprises receiving a manual input of the tag.

15. The method according to any of claims 13 or 14, further comprising:
extracting an image portion from each of the associated images in response to a user touching a point or item in the images by means of the input instrument (14), wherein the respective image portions contains common subject matter based on the area of interest;
transmitting the image portions to a tag generation server (75);
receiving a plurality of tag suggestions from the tag generation server based on the common subject matter; and
applying at least one of the suggested tags to each of the associated images.

16. The method according to any of claims 13-15, further comprising receiving an input of a plurality of areas of interest for a respective plurality of rendered images, and applying the tag to each image that is associated with at least one of the areas of interest.

17. The method according to claim 16, further comprising applying at least a first tag and a second tag to at least one of the associated images, wherein the first tag corresponds to a general image category and the second tag corresponds to a specific image category within the general image category.

## Patentansprüche

1. Elektronische Einrichtung (10), aufweisend:
eine Anzeige (22), die so gestaltet ist, dass sie eine Vielzahl von digitalen Bildern erzeugt;
**dadurch gekennzeichnet, dass**
eine Schnittstelle (22a) so gestaltet ist, dass sie eine Eingabe eines Bereichs von Interesse innerhalb von zumindest einem aus der Vielzahl von erzeugten Bildern empfängt, als Reaktion auf einen Benutzer, der das Bild an der Anzeige mittels eines Eingabeinstruments (14) berührt, wobei der Bereich von Interesse als ein Bildabschnitt in Form einer Miniaturansicht-Darstellung an der Anzeige wiedergegeben wird; und dass sie eine Auswahl von Bildern aus der Vielzahl von erzeugten Bildern empfängt, die dem Bereich von Interesse zugeordnet werden sollen, als Reaktion auf den Benutzer, der die Miniaturansicht und die ausgewählten Bilder an der Anzeige mittels des Eingabeinstruments (14) berührt;
eine Eingabeeinrichtung (24), die so gestaltet ist, dass sie eine Eingabe einer Kennzeichnung basierend auf dem Bereich von Interesse empfängt, die auf die zugeordneten Bilder angewendet werden soll; und
eine Steuerung (30, 92), die so gestaltet ist, dass sie die Kennzeichnungseingabe empfängt und die Kennzeichnung auf jedes der zugeordneten Bilder anwendet, durch Einarbeiten der Kennzeichnung mit einer Bilddatendatei für jedes der digitalen Bilder.

2. Elektronische Einrichtung (10) nach Anspruch 1, wobei die Eingabeeinrichtung (24) so gestaltet ist, dass sie eine manuelle Eingabe der Kennzeichnung empfängt.

3. Elektronische Einrichtung (10) nach einem der Ansprüche 1 oder 2, wobei die Steuerung (30, 92) so gestaltet ist, dass sie einen Bildabschnitt von jedem der zugeordneten Bilder extrahiert, als Reaktion auf einen Benutzer, der einen Punkt oder ein Element in den Bildern mittels des Eingabeinstruments (14) berührt, wobei die Bildabschnitte einen gemeinsamen Gegenstand enthalten, der auf dem Bereich von Interesse basiert; und
die elektronische Einrichtung eine Kommunikationsschaltung (96) aufweist zum Übertragen der Bildabschnitte zu einem Kennzeichnungs-Erzeugungsserver (75) und zum Empfangen einer Vielzahl von Kennzeichnungsvorschlägen von dem Kennzeichnungs-Erzeugungsserver basierend auf dem gemeinsamen Gegenstand; wobei
die Eingabeeinrichtung (24) eine Kennzeichnungseingabe einer Akzeptierung einer der vorgeschlagenen Kennzeichnungen empfängt und die Steuerung ferner so gestaltet ist, dass sie die akzeptierte Kennzeichnung auf jedes der zugeordneten Bilder anwendet.

4. Elektronische Einrichtung (10) nach einem der Ansprüche 1-3, wobei die Schnittstelle (22a) eine Touchscreen-Oberfläche an der Anzeige (22) aufweist, und der Bereich von Interesse eingegeben wird, indem der Bereich von Interesse an einem Abschnitt der Touchscreen-Oberfläche innerhalb von zumindest einem aus den erzeugten Bildern gezeichnet wird.

5. Elektronische Einrichtung (10) nach Anspruch 4, wobei die zugeordneten Bilder aus der Vielzahl von erzeugten Bildern ausgewählt werden, durch Interagieren mit einem Abschnitt der Touchscreen-Oberfläche (22a) innerhalb von jedem der zuzuordnenden Bilder.

6. Elektronische Einrichtung (10) nach Anspruch 1, wobei die Schnittstelle (22a) eine Touchscreen-Oberfläche an der Anzeige (22) aufweist und die Anzeige einen Anzeigeabschnitt (20) aufweist, um den eingegebenen Bereich von Interesse anzuzeigen, und die zugeordneten Bilder durch Interagieren mit der Touchscreen-Oberfläche ausgewählt werden, um den angezeigten Bereich von Interesse auf jedes der zuzuordnenden Bilder anzuwenden.

7. Elektronische Einrichtung (10) nach einem der Ansprüche 1-6, wobei eine Vielzahl von Bereichen von Interesse für eine entsprechende Vielzahl von erzeugten Bildern eingegeben wird, und die Steuerung (30, 92) so gestaltet ist, dass sie die Kennzeichnung auf jedes Bild, das zumindest einem der Bereiche von Interesse zugeordnet ist, anwendet.

8. Die elektronische Einrichtung (10) nach Anspruch 7, wobei zumindest eine erste Kennzeichnung und eine zweite Kennzeichnung auf zumindest eines der zugeordneten Bilder angewendet werden, wobei die erste Kennzeichnung einer allgemeinen Bildkategorie entspricht und die zweite Kennzeichnung einer bestimmten Bildkategorie innerhalb der allgemeinen Bildkategorie entspricht.

9. Elektronische Einrichtung (10) nach Anspruch 7 oder 8, wobei die Steuerung (30, 92) so gestaltet ist, dass sie Programmcode ausführt, der auf einem maschinenlesbaren Medium gespeichert ist, das als eine Kennzeichnungs- Erzeugungsanwendung (38) ausgebildet ist.

10. Die elektronische Einrichtung (10) nach Anspruch 9, wobei die Kennzeichnungs-Erzeugungsanwendung (38) als Hardware-Modul, Firmware, oder Kombinationen davon ausgebildet ist.

11. Kommunikationssystem (68), aufweisend:
eine elektronische Einrichtung (10) nach einem der Ansprüche 1 bis 10; und
einen Kennzeichnungs-Erzeugungsserver (75) aufweisend:
eine Netzwerkschnittstelle (77) zum Empfangen einer Vielzahl von Bildabschnitten von einer elektronischen Einrichtung (10), wobei die Bildabschnitte jeweils aus einer Vielzahl von jeweils zugeordneten Bildern extrahiert werden;
eine Datenbank (78), die eine Vielzahl von Referenzbildern aufweist; und
eine Server-Steuerung (76), die so gestaltet ist, dass sie eine Bilderkennungsfunktion (79) ausführt, um den Gegenstand innerhalb der Vielzahl von Bildabschnitten zu identifizieren und die empfangenen Bildabschnitte mit den Referenzbildern zu vergleichen, um den Gegenstand, der den Bildabschnitten gemeinsam ist, zu identifizieren, und so gestaltet ist, dass sie eine Vielzahl von Kennzeichnungsvorschlägen basierend auf dem gemeinsamen Gegenstand erzeugt, welche auf jedes der zugeordneten Bilder angewendet werden soll;
wobei die Kennzeichnungsvorschläge über die Netzwerkschnittstelle an die elektronische Einrichtung übertragen werden.

12. Kommunikationssystem (68) nach Anspruch 11, wobei die Netzwerkschnittstelle (77) von der elektronischen Einrichtung (10) eine erste Gruppe von Bildabschnitten empfängt, die jeweils aus einer ersten Gruppe von zugeordneten Bildern extrahiert werden, und eine zweite Gruppe von Bildabschnitten, die jeweils aus einer zweiten Gruppe von zugeordneten Bildern extrahiert werden;
die Server-Steuerung (76) so gestaltet ist, dass sie die erste Gruppe der Bildabschnitte mit den Referenzbildern vergleicht, um einen ersten Gegenstand zu identifizieren, der der ersten Gruppe von Bildabschnitten gemeinsam ist, und so gestaltet ist, dass sie eine erste Vielzahl von Kennzeichnungsvorschlägen basierend auf dem ersten gemeinsamen Gegenstand erzeugt, welche auf jedes der ersten zugeordneten Bilder angewendet werden soll; und
die Server-Steuerung (76) so gestaltet ist, dass sie die zweite Gruppe der Bildabschnitte mit den Referenzbildern vergleicht, um einen zweiten Gegenstand zu identifizieren, der der zweiten Gruppe von Bildabschnitten gemeinsam ist, und so gestaltet ist, dass sie eine zweite Vielzahl von Kennzeichnungsvorschlägen basierend auf dem zweiten gemeinsamen Gegenstand erzeugt, welche auf jedes der zweiten zugeordneten Bilder angewendet werden soll;
wobei die erste und die zweite Vielzahl von Kennzeichnungsvorschlägen über die Netzwerkschnittstelle an die elektronische Einrichtung übertragen werden.

13. Verfahren zum Kennzeichnen einer Vielzahl von digitalen Bildern, aufweisend die Schritte:
Erzeugen einer Vielzahl von digitalen Bildern auf einer Anzeige (22); **gekennzeichnet durch**
Empfangen einer Eingabe eines Bereichs von Interesse innerhalb von mindestens einem aus der Vielzahl von digitalen Bildern, als Reaktion auf einen Benutzer, der das Bild an der Anzeige mittels eines Eingabeinstruments (14) berührt, wobei der Bereich von Interesse als ein Bildabschnitt in Form einer Miniaturansicht-Darstellung an der Anzeige wiedergegeben wird;
Empfangen einer Auswahl von Bildern aus der Vielzahl von erzeugten Bildern und Zuordnen der ausgewählten Bilder mit dem Bereich von Interesse, als Reaktion auf den Benutzer, der die Miniaturansicht und die ausgewählten Bilder an der Anzeige mittels des Eingabeinstruments (14) berührt;
Empfangen einer Eingabe einer Kennzeichnung, die auf die zugeordneten Bilder angewendet werden soll; und
Anwenden der eingegebenen Kennzeichnung auf jedes der zugeordneten Bilder durch Einarbeiten der Kennzeichnung mit einer Bilddatendatei für jedes der digitalen Bilder.

14. Verfahren nach Anspruch 13, wobei das Empfangen der Kennzeichnungseingabe das Empfangen einer manuellen Eingabe der Kennzeichnung aufweist.

15. Verfahren nach einem der Ansprüche 13 oder 14, ferner aufweisend:
Extrahieren eines Bildabschnitts von jedem der zugeordneten Bilder als Reaktion auf einen Benutzer, der einen Punkt oder Element in den Bildern mit Hilfe des Eingabeinstruments (14) berührt, wobei die Bildabschnitte einen gemeinsamen Gegenstand enthalten, der auf dem Bereich von Interesse basiert;
Übertragen der Bildabschnitte zu einem Kennzeichnungs-Erzeugungsserver (75);
Empfangen einer Vielzahl von Kennzeichnungsvorschläge von dem Kennzeichnungs-Erzeugungsserver basierend auf dem gemeinsamen Gegenstand; und
Anwenden von zumindest einem der vorgeschlagenen Kennzeichnungen auf jedes der zugeordneten Bilder.

16. Verfahren nach einem der Ansprüche 13-15, ferner aufweisend: Empfangen einer Eingabe von einer Vielzahl von Bereichen von Interesse für eine entsprechende Vielzahl von erzeugten Bildern, und Anwenden der Kennzeichnung auf jedes Bild, das zumindest einem aus den Bereichen von Interesse zugeordnet ist.

17. Verfahren nach Anspruch 16, ferner aufweisend: Anwenden von zumindest einer ersten Kennzeichnung und einer zweiten Kennzeichnung auf mindestens eines der zugeordneten Bilder, wobei die erste Kennzeichnung einer allgemeinen Bildkategorie entspricht und die zweite Kennzeichnung einer bestimmten Bildkategorie innerhalb der allgemeinen Bildkategorie entspricht.

## Revendications

1. Dispositif électronique (10) comprenant :
un écran (22) configuré pour restituer une pluralité d'images numériques ;
**caractérisé par**
une interface (22a) configurée pour recevoir une entrée d'une zone d'intérêt sur au moins l'une de la pluralité d'images restituées, en réponse à un utilisateur qui touche l'image sur l'écran à l'aide d'un instrument d'entrée (14), la zone d'intérêt étant reproduite comme une partie d'image sous la forme d'une représentation miniature sur l'écran, et pour recevoir une sélection d'images parmi la pluralité d'images restituées, en réponse à l'utilisateur qui touche l'image miniature et les images sélectionnées sur l'écran à l'aide de l'instrument d'entrée (14), à associer avec la zone d'intérêt ;
un dispositif d'entrée (24) configuré pour recevoir une entrée d'une balise sur la base de la zone d'intérêt à appliquer aux images associées ; et
un contrôleur (30, 92) configuré pour recevoir l'entrée de balise et pour appliquer la balise à chacune des images associées en intégrant la balise à un fichier de données d'image pour chacune des images numériques.

2. Dispositif électronique (10) selon la revendication 1, dans lequel le dispositif d'entrée (24) est configuré pour recevoir une entrée manuelle de la balise.

3. Dispositif électronique (10) selon l'une quelconque des revendications 1 ou 2, dans lequel le contrôleur (30, 92) est configuré pour extraire une partie d'image de chacune des images associées en réponse à un utilisateur qui touche un point ou un élément des images à l'aide de l'instrument d'entrée (14), les parties d'images contenant un sujet commun qui repose sur la zone d'intérêt ; et
le dispositif électronique comprend un circuit de communication (96) destiné à transmettre les parties d'images à un serveur de génération de balises (75) et à recevoir une pluralité de suggestions de balises de la part du serveur de génération de balises sur la base du sujet commun ;
dans lequel
le dispositif d'entrée (24) reçoit une entrée de balise d'une acceptation de l'une des balises suggérées, et le contrôleur est en outre configuré pour appliquer la balise acceptée à chacune des images associées.

4. Dispositif électronique (10) selon l'une quelconque des revendications 1 à 3, dans lequel l'interface (22a) comprend une surface tactile sur l'écran (22), et la zone d'intérêt est transmise en dessinant la zone d'intérêt sur une partie de la surface tactile sur au moins l'une des images restituées.

5. Dispositif électronique (10) selon la revendication 4, dans lequel les images associées sont choisies parmi la pluralité d'images restituées en interagissant avec une partie de la surface tactile (22a) sur chacune des images à associer.

6. Dispositif électronique (10) selon la revendication 1, dans lequel l'interface (22a) comprend une surface tactile sur l'écran (22), et l'écran possède une partie d'affichage (20) pour afficher la zone d'intérêt transmise, et les images associées sont sélectionnées en interagissant avec la surface tactile afin d'appliquer la zone d'intérêt affichée à chacune des images à associer.

7. Dispositif électronique (10) selon l'une quelconque des revendications 1 à 6, dans lequel une pluralité de zones d'intérêt est transmise pour une pluralité respective d'images restituées, et le contrôleur (30, 92) est configuré pour appliquer la balise à chaque image qui est associée à au moins l'une des zones d'intérêt.

8. Dispositif électronique (10) selon la revendication 7, dans lequel au moins une première balise et une seconde balise sont appliquées à au moins l'une des images associées, la première balise correspondant à une catégorie d'images générale et la seconde balise correspondant à une catégorie d'images spécifique dans la catégorie d'images générale.

9. Dispositif électronique (10) selon la revendication 7 ou 8, dans lequel le contrôleur (30, 92) est configuré pour exécuter un code de programme stocké sur un support lisible par une machine intégré sous forme d'application de génération de balises (38).

10. Dispositif électronique (10) selon la revendication 9, dans lequel l'application de génération de balises (38) est intégrée sous forme de modules matériels, d'un firmware, ou de combinaisons de ceux-ci.

11. Système de communication (68) comprenant :
un dispositif électronique (10) selon l'une quelconque des revendications 1 à 10 ; et
un serveur de génération de balises (75) comprenant :
une interface réseau (77) pour recevoir une pluralité de parties d'images de la part d'un dispositif électronique (10), les parties d'images étant chacune extraites d'une pluralité d'images associées respectives ;
une base de données (78) comprenant une pluralité d'images de référence ; et
un contrôleur de serveur (76) configuré pour exécuter une fonction de reconnaissance d'image (79) afin d'identifier un sujet sur la pluralité de parties d'images, et pour comparer les parties d'images reçues aux images de référence afin d'identifier un sujet commun aux parties d'images, et configuré pour générer une pluralité de suggestions de balises sur la base du sujet commun à appliquer à chacune des images associées ;
dans lequel les suggestions de balises sont transmises par le biais de l'interface réseau au dispositif électronique.

12. Système de communication (68) selon la revendication 11, dans lequel l'interface réseau (77) reçoit, de la part du dispositif électronique (10), un premier groupe de parties d'images qui sont chacune extraites d'un premier groupe d'images associées, et un second groupe de parties d'images qui sont chacune extraites d'un second groupe d'images associées ;
le contrôleur de serveur (76) est configuré pour comparer le premier groupe de parties d'images aux images de référence afin d'identifier un premier sujet commun au premier groupe de parties d'images, et configuré pour générer une première pluralité de suggestions de balises sur la base du premier sujet commun à appliquer à chacune des premières images associées ; et
le contrôleur de serveur est configuré pour comparer le second groupe de parties d'images aux images de référence afin d'identifier un second sujet commun au second groupe de parties d'images, et configuré pour générer une seconde pluralité de suggestions de balises sur la base du second sujet commun à appliquer à chacune des secondes images associées ;
dans lequel la première et la seconde pluralités de suggestions de balises sont transmises par le biais de l'interface réseau au dispositif électronique.

13. Procédé de balisage d'une pluralité d'images numériques comprenant les étapes de :
restitution d'une pluralité d'images numériques sur un écran (22) ; **caractérisé par**
la réception d'une entrée d'une zone d'intérêt sur au moins l'une de la pluralité d'images numériques, en réponse à un utilisateur qui touche l'image sur l'écran à l'aide d'un instrument d'entrée (14), la zone d'intérêt étant reproduite comme une partie d'image sous la forme d'une représentation miniature sur l'écran,
la réception d'une sélection d'images parmi la pluralité d'images restituées, et l'association des images sélectionnées à la zone d'intérêt en réponse à l'utilisateur qui touche l'image miniature et les images sélectionnées sur l'écran à l'aide de l'instrument d'entrée (14) ;
la réception d'une entrée d'une balise à appliquer aux images associées ; et
l'application de la balise à chacune des images associées en intégrant la balise à un fichier de données d'image pour chacune des images numériques.

14. Procédé selon la revendication 13, dans lequel la réception de l'entrée de balise comprend la réception d'une entrée manuelle de la balise.

15. Procédé selon l'une quelconque des revendications 13 ou 14, comprenant en outre :
l'extraction d'une partie d'image de chacune des images associées en réponse à un utilisateur qui touche un point ou un élément des images à l'aide de l'instrument d'entrée (14), les parties d'images respectives contenant un sujet commun qui repose sur la zone d'intérêt ; et
la transmission des parties d'images à un serveur de génération de balises (75) ;
la réception d'une pluralité de suggestions de balises de la part du serveur de génération de balises sur la base du sujet commun ; et
l'application d'au moins l'une des balises suggérées à chacune des images associées.

16. Procédé selon l'une quelconque des revendications 13 à 15, comprenant en outre la réception d'une entrée d'une pluralité de zones d'intérêt pour une pluralité respective d'images restituées, et l'application de la balise à chaque image qui est associée à au moins l'une des zones d'intérêt.

17. Procédé selon la revendication 16, comprenant en outre l'application d'au moins une première balise et une seconde balise à au moins l'une des images associées, la première balise correspondant à une catégorie d'images générale et la seconde balise correspondant à une catégorie d'images spécifique dans la catégorie d'images générale.
